# EUROPEAN PATENT SPECIFICATION

(11) **EP 2 782 753 B1**
(45) Date of publication and mention of the grant of the patent: **09.09.2020**
(21) Application number: 12791659.1
(22) Date of filing: 14.11.2012
(51) Int. Cl.: B32B 17/10, C03C 17/00, C03C 21/00

(54) **STRENGTHENED GLASS AND GLASS LAMINATES HAVING ASYMMETRIC IMPACT RESISTANCE**
VERSTÄRKTE GLAS- UND GLASLAMINATE MIT ASYMMETRISCHER SCHLAGFESTIGKEIT
VERRE ET STRATIFIÉS DE VERRE RENFORCÉS PRÉSENTANT UNE RÉSISTANCE ASYMÉTRIQUE AU CHOC

(30) Priority: 23.11.2011 US 201161563074 P
(43) Date of publication of application: 01.10.2014
(73) Proprietor: Corning Incorporated, Corning, New York 14831 (US)
(72) Inventor: HART, Shandon Dee, Corning, New York 14830 (US); BAREFOOT, Kristen Lorraine, Lawrenceville, PA 16929 (US); BAYNE, John Frederick, Elmire, New York 14903 (US); PRICE, James Joseph, Corning, New York 14830 (US); CITES, Jeffrey Scott, Horseheads, New York 14845 (US); MOORE, Michael John, Corning, New York 14830 (US)
(74) Representative: Epping - Hermann - Fischer
(86) International application number: PCT/US2012/064923
(87) International publication number: WO 2013/078039

(56) References cited:
- EP-A1- 0 945 254
- EP-A1- 1 164 112
- EP-A1- 2 903 825
- EP-A2- 2 785 662
- WO-A1-03/074442
- WO-A1-2011/149694
- WO-A2-2005/007592
- DE-A1- 4 331 263
- GB-A- 1 071 351
- US-A- 3 816 222
- US-A- 6 060 178
- US-A1- 2004 028 953
- US-A1- 2008 160 321
- US-A1- 2009 197 048

## Description

### Field

The present invention is generally directed to strengthened glass, and is specifically directed to strengthened glass and glass laminates having asymmetric impact resistance.

### SUMMARY

In some applications, it may be desirable to utilize a strengthened glass or strengthened glass laminate having a differential in impact resistance depending on which side of the glass is impacted. In particular, for automotive or aircraft applications, it is desirable that windows have a high impact resistance for external objects (such as falling trees or birds). However, when automobile glass is impacted from the interior surface (such as by passengers during an accident), it is often desirable that the glass will fracture in order to dissipate the impact energy while minimizing the impact acceleration on the passenger's body.

Automobile glass may include a laminated structure, such as a glass-polymer-glass laminate, wherein the polymer layer or layers maintain cohesion even when the glass breaks. By maintaining cohesion, passengers are not ejected from the vehicle during a crash, and glass fragments are contained. The glass fracture allows energy to be absorbed and lessens the acceleration or deceleration experienced by the passenger, thereby reducing bodily injury. Thus, it also may be desirable that the glass can be broken more easily from the interior, for example, in scenarios where passengers are trapped in a car and need a means of escape. The glass must be strong enough to withstand a certain low level of impact, but weak enough to break under a higher level of impact.

Accordingly, it is advantageous to de-couple the internal and external impact resistance of a sheet of strengthened glass, thereby yielding a higher impact resistance for external collisions but a lower impact resistance for internal collisions. As used herein, "impact resistance" is defined by the amount of force or load that the glass can withstand prior to breakage under various testing conditions. Glass with low impact resistance will break under a lower load than a glass with high impact resistance. The breakage thus defined is considered to be a 'catastrophic' breakage where at least one entire glass layer within the laminate suffers fractures that extend substantially through the entire thickness of the glass layer. This is distinguished from mere surface chipping, surface scratching, or shallow surface cracking, which does not embody the type of asymmetric breakage performance or asymmetric impact resistance of this invention.

Embodiments of the present invention are directed to providing a strengthened glass laminate that demonstrates an asymmetric impact resistance which depends on the direction of impact (i.e. depends on which side of the glass is impacted). As used herein, "strengthened glass laminate" defines any single layer or multilayer glass structure, which comprises glass and optionally other layers, wherein the glass is treated to achieve an asymmetric impact resistance. The glass may be coated, tempered, cured, strengthened through an ion exchange process, or treated via various other processes familiar to one of ordinary skill in the art. This differential in impact resistance correlates to a difference in tensile surface strength between the two sides of the strengthened glass laminate.

GB 1 071 351 A, WO 03/074442 A1, WO 2005/007592 A, US 2004/028953 A1, EP 1 164 112 A1, US 6 060 178 A, US 2008/160321 A1, US 3 816 222 A, DE 43 31 263 A1, US 2009/197048 A1, and WO 2011/149694 A1 disclose coatings on glass substrate.

The above object is achieved by providing the strengthened glass laminate according to claim 1 and the method for producing the laminate according to claim 7. Preferred embodiments are set forth in the dependent claims.

### BRIEF DESCRIPTION OF THE DRAWINGS

The following detailed description of specific embodiments of the present invention can be best understood when read in conjunction with the drawings enclosed herewith.

Because of the need for glass to break when impacted by passengers, the automotive industry typically creates breakage thresholds for automotive window glass, which may be tested using methods such as ball drop testing.
FIG. 1 is a graphical illustration of the ring-on-ring testing results yielded from the experiments described in Example 1 below.
FIGS. 2 and 3 are graphical illustrations of ball-drop testing results yielded from the experiments described in Reference Example 2 below.
FIGS. 4A-4D provide depictions of multiple alternative embodiments of strengthened glass laminates in accordance with one or more embodiments of the present invention. Individual features of the drawings and invention will be more fully apparent and understood in view of the detailed description.

### DETAILED DESCRIPTION

Embodiments of the present disclosure are directed to strengthened glass laminates which demonstrate an impact resistance which depends on the direction of impact (i.e. depends on which side of the glass is impacted). Impact resistance can be measured, for example, through ball-drop testing as shown in the Examples below.

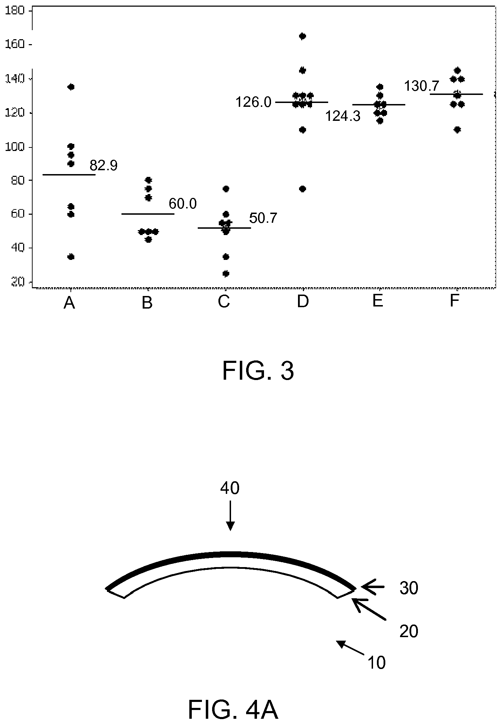

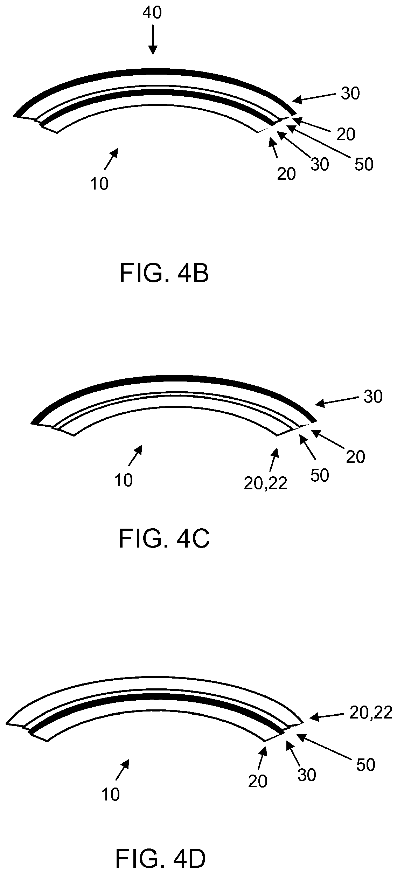

The strengthened glass laminate comprises at least one layer of strengthened glass having a first surface and a second surface disposed opposite the first surface, and one or more coatings adhered to the first surface of the strengthened glass. Without being constrained by theory, controlling the properties of this first-surface coating is believed to impart the differential in impact resistance in the strengthened glass laminate, generally with an impact resistance to impacts directed toward the second surface which is lower than an impact resistance to impacts directed toward the first surface. For example, in an automotive window application, the desired orientation would be for the coating(s) to be placed on the exterior surface of the glass or the exterior-facing surface of one or more of the glass layers in a laminate (as illustrated in the embodiments of FIG. 4). It also is possible to place a coating on the second (interior) surface of the glass laminate, but this second-surface coating should have its properties controlled in such a way that it does not impart the same change in impact resistance as the first-surface coating.

Various strengthened glass compositions are contemplated as suitable. In the methods described below, the method of making the laminate may include steps for strengthening the glass, or it is contemplated that the method may utilize strengthened glass which has already been tempered or strengthened as a raw material. For example, the strengthened glass materials may include numerous materials familiar to one of ordinary skill in the art, for example, alkali aluminosilicate, alkali aluminoborosilicate, or combinations thereof. In addition to the base glass material (e.g., the alkali aluminosilicate or alkali aluminoborosilicate), the strengthened glass may also comprise greater than 2.0 mol% of oxides selected from the group consisting of Al₂O₃, ZrO₂, or mixtures thereof, or in a further embodiment, greater than 4.0 mol% of oxides selected from the group consisting of Al₂O₃, ZrO₂, or mixtures thereof.

Various thicknesses are contemplated for the glass, which is highly dependent on the industrial application in which the strengthened glass laminate is used. The glass may have a thickness of about 0.01 to about 10 mm, or in another embodiment, from about 0.1 to about 2 mm.

The strengthened glass is desirably non-roughened and is substantially free of surface flaws such as scratches or pits that are visible to the eye or to a standard optical microscope. This not only useful because of the high transparency of the strengthened glass in window applications, but in addition the present inventors have recognized that adhering the coating to non-rough, substantially flaw-free glass yields a more desirable asymmetric impact resistance than glass that may have been roughened or flawed by some conventional handling techniques. Consequently, it is desirable that the strengthened glass is substantially clear, transparent and free from light scattering. Optional treatment applications which remove surface imperfections in the glass are described below.

Without being bound by theory, it is believed that the asymmetric impact resistance is at least partially dependent on the adhesion of the coating to the strengthened glass and on one or more of the elastic modulus of the coating material, the hardness of the coating material, and the brittle fracture behavior of the coating. Brittle fracture behavior is typically associated with materials that exhibit minimal ductile or plastic deformation, and may have relatively high glass transition temperatures in the case of amorphous materials. Coatings that exhibit brittle fracture behavior have been found to enhance the asymmetric breakage behavior of the inventive glass laminates. Without being bound by theory, adhesion is promoted through careful cleaning and preparation of the glass surface prior to coating, the selection of coating materials, and selection of coating conditions.

These properties, particularly adhesion or resistance to delamination, can be tested in various ways, for example, through diamond indentation failure analysis. Other techniques include microscopic surface scanning using optical or profilometer methods. The coatings of the present disclosure do not delaminate from the glass when inspected under an optical microscope after indentation with a Berkovich diamond indenter with a load of from 4 grams to 40 grams or higher.

Additionally, the coating(s) includes a high elastic modulus, and a high scratch resistance. The coating comprises an elastic modulus measured through diamond nano-indendation greater than 16 GPa. Moreover, the coating comprises a hardness measured through diamond nano-indentation greater than 1.7 GPa, or optionally greater than about 2.0 GPa. Moreover, the coating may possess a density or refractive index that approaches theoretical values for a dense thin coating of the selected material. Alternatively, the coating material may be selected, which has a similar refractive index to either the glass or other coating layers, to minimize optical interference effects.

Moreover, particulate or pinhole defects in the film can be desirably imparted into the coating to modify the fracture behavior. Specifically, built-in film stresses created during coating, curing, annealing, or other process steps can also be tailored to achieve a certain fracture behavior.

The coating is selected from the group consisting SiO₂, Al₂O₃, TiO₂, Nb₂O₅, Ta₂O₅, ZrO₂, or combinations thereof. The coating includes a thickness of 0.01 to 10 µm.

In addition to imparting the asymmetric impact resistance to the glass, the coating may also serve other functions, or be integrated with coating layers that serve other functions. The coating layer(s) may comprise UV or IR light reflecting or absorbing layers, colorants or tint, anti-reflection coatings, anti-glare coatings, dirt-resistant layers, self-cleaning layers, fingerprint-resistant layers, and the like. Further, the coating layer(s) may comprise conducting or semi-conducting layers, thin film transistors, EMI shielding layers, breakage sensors, alarm sensors, electrochromic materials, photochromic materials, touch sensing layers, light emitting layers, or information display layers. When information display layers are integrated with the glass, the glass may form part of a touch-sensitive display, a transparent display, or a heads-up display. It may be desirable that the coating layers form an interference coating which selectively transmits, reflects, or absorbs different wavelengths or colors of light, for example to selectively reflect a targeted wavelength in a heads-up display application.

There are various options for the structure of the strengthened glass laminate 10 as shown in the embodiments of FIGS. 4A-4D. As shown, a coating 30 which imparts asymmetric impact resistance is desirably located on the exterior-facing surface 40 (surface facing away from the passenger) of one or more of the strengthened glass layers 20 which form the laminate 10 for automotive and similar applications. When multiple sheets of glass 20, 22 are used in the laminate structure, glass sheets having different thicknesses can be used, for example to minimize weight. In alternative embodiments, as shown in FIGS. 4C and 4D, for example, strengthened sheets of glass 20 can be combined with non-strengthened sheets of glass 22, for example to save cost or to provide a certain breakage threshold or targeted level of impact resistance. (Sheets labeled 20, 22 are alternatively strengthened glass 20 or non-strengthened glass 22, depending on the desired characteristics of the laminate as a whole.) As shown, the glass laminate 10 may be curved or shaped in the final application, for example, as in an automotive windshield, sunroof, or side window. The shape of the glass laminate 10, the curvature of the glass sheets 20,22, and mounting of the glass laminate 10 may also be optimized to assist in achieving the intended resistance to impact or breakage thresholds. The thickness of the glass sheets 20,22 or glass laminate 10 can vary for either design or mechanical or impact resistance reasons. For example, the glass sheets 20,22 and/or the glass laminate 10 as a whole may be thicker at the edges.

In specific embodiments and as shown in FIGS. 4A-4D, the strengthened glass laminate may comprise one or more adhesion promoters (not shown) disposed between the coating and the strengthened glass, or between other successive layers within the laminate 10. For example and not by way of limitation, these adhesion promoters may include silanes, epoxies, adhesives or mixtures thereof. We believe that these interlayers or additional coating layers should maintain similar adhesion and mechanical properties throughout the multilayer structure as those specified above, in order to impart the asymmetric impact resistance to the glass. Referring to FIGS. 4C, 4B, and 4D, in particularly the strengthened glass laminate may also include an interlayer 50 such as a polymer material, for example, polyvinyl butryal (PVB), but many other materials, for example, various polymers may also be used.

As stated above, the method of making the strengthened glass laminate may greatly impact the final properties of the strengthened glass laminate. The glass, which is desirably free of visible imperfections, may be further treated to remove any surface imperfections. In one embodiment, the glass may be acid polished or otherwise treated to remove or reduce the effect of surface flaws on the glass. Moreover, the glass may be strengthened through chemical or thermal tempering. For example, the glass may be chemically tempered through ion-exchange immersion in a molten salt bath. The glass may be strengthened through ion-exchange before coating, generating a surface compressive stress in the glass greater than about 500 MPa as measured after ion-exchange and before coating. The glass may also be strengthened through various methods known in the art that involve creating an integral surface layer on the glass having a lower thermal expansion coefficient than the inner bulk of the glass, which generates surface compression upon cooling. Alternatively or in addition to chemical tempering, the glass may be thermally tempered according to methods known in the art.

After strengthening the glass, the coating(s) may be applied to the strengthened glass utilizing various techniques familiar to one of ordinary skill in the art. For example, the coatings may be applied via vacuum coating, sputtering, liquid-based coating techniques, sol-gel, or polymer coating methods.

### EXAMPLES

The following examples show the asymmetric impact resistance of exemplary strengthened glass laminates utilizing ring-on-ring testing and ball drop testing. Both of these tests are correlated to one another in that they test the tensile surface strength of the glass article. Ring-on-ring testing was typically performed using controlled Instron loading apparatus that places an increasing load on the glass until fracture, using a fixed strain rate of 1.2mm/min. The glass was pressed down from above using a 12.7 mm (0.5") diameter load ring and supported from below by a 25.4 mm (1.0") support ring. Fracture origins typically occur within the diameter of the inner load ring.

Example 1: 0.7 mm thick aluminosilicate glass samples (Corning Code 2317) were ion-exchange strengthened by immersing the glass in a molten potassium nitrate bath at 410°C for 6 hours. The samples were cleaned using an ultrasonic bath with detergent, dried, and subsequently treated by a room-temperature Ar /O₂ plasma for ∼5 minutes. The samples were then coated using reactive RF sputtering with a 4-layer anti-reflection coating (Nb₂O₅ /SiO₂ / Nb₂O₅ /SiO₂). The coating layers were approximately 13.1 nm / 34.7 nm / 114.8 nm / 88.6 nm in thickness, respectively. The reactive RF sputtering was carried out using Ar /O₂ ion-assist. The chamber pressure was 0.27 mPa (2e⁻⁶ torr) base pressure before coating. During coating,

Ar and O₂ were added to the chamber at roughly equal flow rates, bringing the process pressure up to ∼ 0.23 Pa (1.7 x 10⁻³ torr). Nb₂O₅ layers were deposited at a rate of ∼1.8 Ǻ/sec and SiO₂ layers were deposited at ∼0.5 Ǻ/sec. The films obtained had a high density as indicated by their refractive index values (measured by ellipsometry on witness silicon wafers), when compared to literature values for fully dense material (index values @ 550 nm: Nb₂O₅ = 2.35, SiO₂ = 1.46). The films also had strong adhesion to glass as evidenced by the absence of any significant delamination when inspected using an optical microscope after Berkovich diamond indentation at loads ranging from 4 grams up to 40 grams. The films also demonstrated good scratch resistance owing to their high density and intrinsic material hardness.

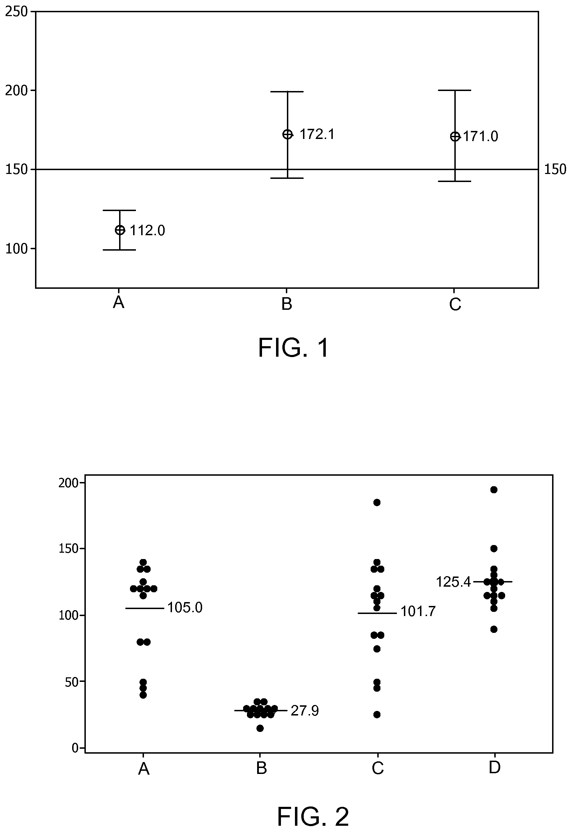

The samples of Example 1 were tested using ring-on-ring load testing. Both the control samples and coated samples were ion-exchanged using similar conditions. Results are summarized in FIG. 1, in which the load at failure is shown in units of kg of force on the y-axis for samples sets from three different cases (labeled on the x-axis): For case A, when the coated surface is down (in tension and the load is applied to the uncoated surface), the amount of load the glass could tolerate before failure was less than when the coated surface is up (in compression and the load is applied to the coated surface). For case B, when tested in the "strong" orientation (coated side up / in compression), the strengthened glass demonstrates a tensile surface strength which is comparable to the uncoated, strengthened glass control samples, shown in case C. It has been found that the ring-on-ring measurement of tensile surface strength correlates well to impact resistance, which is more directly measured through ball-drop testing. Consequently, it may be concluded from the results summarized in FIG. 1 that there is a significant difference in impact resistance when a load is applied to the uncoated glass surface versus the coated glass surface, thereby demonstrating asymmetric tensile surface strength and asymmetric impact resistance.

In addition, comparative examples which are similar in nature to Example 1 were prepared by coating strengthened aluminosilicate glass with SiO₂ or Ta₂O₅ using e-beam evaporation. E-beam evaporation is a common thin film coating technique that is often considered to generate similar results as reactive sputtering. The samples were prepared and cleaned as in example 1. Various e-beam coating conditions were tested, including: 1) Ta₂O₅ coated (200 nm) at 230°C under Ar / O₂ plasma (60V); 2) Ta₂O₅ coated (195 nm) at 50-180°C under Ar / O₂ plasma (70V); 3) Ta₂O₅ coated (220 nm) at 50-180°C with no plasma; 4) SiO₂ coated (180 nm) at 50-150°C under AR / O₂ plasma (70V); 5) SiO₂ coated (170 nm) at 300°C with no plasma. These samples were subjected to ring-on-ring testing with the coated surfaces in tension, and all test conditions showed similar average breakage strength to uncoated control samples, that is, the e-beam coated samples listed here did not show any evidence of asymmetric surface strength or impact resistance. We attribute this to the generally lower-energy and less reactive conditions of e-beam deposition vs. reactive sputtering deposition. The films were found to be somewhat less dense than the reactive sputtered films through refractive index measurements. Importantly, the e-beam coated films were found to noticeably delaminate from the glass when inspected with an optical microscope after indentation with a Berkovich diamond indenter at loads as low as 4 grams, with even greater delamination at 16 and 40 grams, and the delaminated film area was found to extend to the edges of the indenter contact region.

Reference Example 2: Aluminosilicate glass (Corning 2318) was ion-exchanged in a molten potassium nitrate bath at 410°C for 6 hours. These samples were then cleaned in an ultrasonic bath with detergent and subsequently acid polished by static immersion in an acid bath consisting of 1.5M HF + 0.9M H₂SO₄ for 2 minutes. Then, the samples were rinsed in deionized water and dried. A commercially available methyl siloxane polymer (Accuglass T-214, Honeywell) was diluted into a mixture of 12.5% as-received T-214, 86.5% isopropanol, and 1% 2-methoxyethanol. The resulting solution was coated onto the aluminosilicate glass substrates using a liquid spray coating method. The final coating thickness after drying and curing was ∼100 nm. The coatings were dried at 110°C for 10 minutes, and then cured for 1 hour at varying final cure temperatures.

The coated glass samples of Reference Example 2 were tested for impact resistance through ball-drop testing. The ball-drop testing consisted of dropping a 225 g steel ball at increasing heights, starting at 10 cm and increasing in 10 cm increments until the glass failed. The samples were 50x50 mm in size and placed in a steel frame that supported all edges of the sample during ball-drop testing. A pressure-sensitive adhesive tape was laminated to the bottom side (tensile side) of the samples before ball-drop testing to contain the shards of glass during breakage (this has been found to have negligible influence on the ball drop results). The test results are summarized in FIGS. 2 and 3, showing test data points with the y-axis representing the ball drop height in centimeters at failure.

Referring to FIG. 2, result sets A and B are of samples cured at 315° C, with result set A for testing with the coating side up, and B with the coating side down, while result set C is for samples cured at 315° C, tested with coating side up. Result set D is an uncoated glass sheet tested as a control. Referring to FIG. 3, result sets A-C are for glass plus coating with coating side down but with the curing step performed at varying temparture: 250° C for result set A, 295° C for B, and 315° C for C. Result set D is an uncoated sheet as a control, while set E is from a coated but un-cured sheet (with coating downward) and set F is from a coated sheet with coating downward, but with the curing step performed at only 250° C.

From the results shown in FIGS. 2 and 3, the samples cured at temperatures above ∼ 290° C demonstrate the asymmetric impact resistance of the present disclosure. As shown in FIG. 2, the position of the coat i.e., side up or side down greatly affects the impact resistance of the laminate sample, clearly demonstrating asymmetric impact resistance for those siloxane-coated samples that were cured at 300° C or above. Further as shown in FIG. 3, samples coated with the same film, but cured at 150° C or below, do not demonstrate the asymmetric breakage behavior of films cured at 295 or 315° C, thereby demonstrating that the thermal curing step affects the final properties of the strengthened glass laminates. This can be attributed to the changing properties of the siloxane film that are achieved at different curing temperatures. Through careful analysis of the siloxane film properties versus their final curing temperature, we established desirable ranges of the thin film coating modulus and hardness that have already been specified above. In addition, it is known that siloxane polymers have strong adhesion to clean glass surfaces, which is necessary to generate the asymmetric breakage performance of the invention.

Siloxane-coated glass samples cured at 150°C or below (FIG. 3, result set F) do not demonstrate the asymmetric impact resistance of the invention. Thus, these represent comparative examples, which we believe do not meet the criteria of film modulus and hardness that are needed to generate the asymmetric impact resistance of the invention.

## Claims

1. A strengthened glass laminate comprising:
at least one layer of strengthened glass having a first surface and a second surface disposed opposite the first surface; and
one or more coatings adhered to the first surface of the strengthened glass,
**characterized in that** the one or more coatings impart an asymmetric impact resistance, as determined according to the method in the description,
which depends on which surface of the glass is impacted to the at least one layer of strengthened glass as evidenced by an absence of delamination when inspected under an optical microscope after indentation with a Berkovich diamond indenter with a load of from 4 grams to 40 grams, the coating having:
(i) one or more oxides selected from the group consisting of SiO₂, Al₂O₃, TiO₂, Nb₂O₅, Ta₂O₅, ZrO₂, or combinations thereof,
(ii) a thickness of 0.01 to 10 µm,
(iii) an elastic modulus greater than 16 GPa as measured by diamond nano-indentation,
(iv) a hardness greater than 1.7 GPa as measured by diamond nanoindentation.

2. The strengthened glass laminate of claim 1 wherein the strengthened glass comprises alkali aluminosilicate, alkali aluminoborosilicate, or combinations thereof, and wherein the asymmetric impact resistance comprises an impact resistance to impacts directed toward the second surface which is lower than an impact resistance to impacts directed toward the first surface.

3. The strengthened glass laminate of any of claims 1 and 2 wherein the strengthened glass comprises greater than 2.0 mol% of oxides selected from the group consisting of Al₂O3, ZrO₂, or mixtures thereof.

4. The strengthened glass laminate of any of claims 1-3 wherein the oxide is SiO₂.

5. The strengthened glass laminate of any of claims 1-4 wherein the glass has a thickness of 0.01 to 10 mm.

6. The strengthened glass laminate of any of claims 1-5 wherein the strengthened glass is non-roughened and is substantially free of visible flaws or imperfections.

7. A method of producing a strengthened glass laminate comprising:
providing glass substantially free of visible imperfections; and
strengthening the glass through chemical tempering, thermal tempering, or both;
**characterized in that** the method further comprises applying a coating onto at least one surface of the strengthened glass to produce a strengthened glass laminate having asymmetric impact resistance, as determined according to the method in the description,
which depends on which surface of the glass is impacted as evidenced by an absence of delamination when inspected under an optical microscope after indentation with a Berkovich diamond indenter with a load of from 4 grams to 40 grams, the coating having:
(i) one or more oxides selected from the group consisting of SiO₂, Al₂O₃, TiO₂, Nb₂O₅, Ta₂O₅, ZrO₂, or combinations thereof,
(ii) a thickness of 0.01 to 10 µm,
(iii) comprises an elastic modulus greater than 16 GPa as measured by diamond nano-indentation,
(iv) a hardness greater than 1.7 GPa as measured by diamond nanoindentation.

## Patentansprüche

1. Verstärktes Glaslaminat, umfassend:
mindestens eine Schicht aus verstärktem Glas mit einer ersten Fläche und einer zweiten Fläche, die der ersten Fläche entgegengesetzt angeordnet ist; und
eine oder mehrere Beschichtung/en, die an der ersten Fläche des verstärkten Glases anhaftet bzw. anhaften,
**dadurch gekennzeichnet, dass** die eine oder mehreren Beschichtung/en eine wie gemäß dem Verfahren in der Beschreibung bestimmte asymmetrische Stoßfestigkeit verleiht bzw. verleihen, die davon abhängt, auf welcher Fläche das Glas bis zu der mindestens einen Schicht aus verstärktem Glas einen Schlag erfährt, wie durch ein Nichtvorhandensein einer Delaminierung nachgewiesen wird, wenn es unter einem optischen Mikroskop nach einer Einkerbung mit einem Berkovich-Diamant-Indenter bei einer Last von 4 Gramm bis 40 Gramm inspiziert wird, wobei die Beschichtung hat:
(i) ein oder mehrere Oxid/e, das bzw. die aus der Gruppe ausgewählt ist bzw. sind, die aus SiO₂, Al₂O₃, TiO₂, Nb₂O₅, Ta₂O₅, ZrO₂ oder Kombinationen davon besteht,
(ii) eine Dicke von 0,01 bis 10 µm,
(iii) einen Elastizitätsmodul von über 16 GPa wie durch Diamant-Nanoeinkerbung gemessen,
(iv) eine Härte von über 1,7 GPa wie durch Diamant-Nanoeinkerbung gemessen.

2. Verstärktes Glaslaminat nach Anspruch 1, wobei das verstärkte Glas Alkalialumosilikat, Alkalialumoborsilikat oder Kombinationen davon umfasst, und wobei die asymmetrische Stoßfestigkeit eine Stoßfestigkeit gegen Stöße umfasst, die zur zweiten Fläche hin gerichtet sind, die niedriger ist als eine Stoßfestigkeit gegen Stöße, die zur ersten Fläche hin gerichtet sind.

3. Verstärktes Glaslaminat nach einem der Ansprüche 1 und 2, wobei das verstärkte Glas mehr als 2,0 Mol-% an Oxiden umfasst, die aus der Gruppe ausgewählt sind, die aus Al₂O₃, ZrO₂ oder Gemischen davon besteht.

4. Verstärktes Glaslaminat nach einem der Ansprüche 1 bis 3, wobei es sich bei dem Oxid um SiO₂ handelt.

5. Verstärktes Glaslaminat nach einem der Ansprüche 1 bis 4, wobei das Glas eine Dicke von 0,01 bis 10 mm hat.

6. Verstärktes Glaslaminat nach einem der Ansprüche 1 bis 5, wobei das verstärkte Glas nicht aufgeraut und im Wesentlichen frei von sichtbaren Mängeln und Fehlern ist.

7. Verfahren zum Herstellen eines gehärteten Glaslaminats, umfassend:
Bereitstellen von Glas, das im Wesentlichen frei von sichtbaren Fehlern ist; und
Härten des Glases durch chemisches Vorspannen, thermisches Vorspannen oder beides;
**dadurch gekennzeichnet, dass** das Verfahren darüber hinaus umfasst, eine Beschichtung auf mindestens eine Fläche des gehärteten Glases aufzutragen, um ein gehärtetes Glaslaminat mit einer wie gemäß dem Verfahren in der Beschreibung bestimmten asymmetrischen Stoßfestigkeit herzustellen, die davon abhängt, auf welcher Fläche das Glas einen Schlag erfährt, wie durch ein Nichtvorhandensein einer Delaminierung nachgewiesen wird, wenn es unter einem optischen Mikroskop nach einer Einkerbung mit einem Berkovich-Diamant-Indenter bei einer Last von 4 Gramm bis 40 Gramm inspiziert wird, wobei die Beschichtung hat:
(i) ein oder mehrere Oxid/e, das bzw. die aus der Gruppe ausgewählt ist bzw. sind, die aus SiO₂, Al₂O₃, TiO₂, Nb₂O₅, Ta₂O₅, ZrO₂ oder Kombinationen davon besteht,
(ii) eine Dicke von 0,01 bis 10 µm,
(iii) einen Elastizitätsmodul von über 16 GPa wie durch Diamant-Nanoeinkerbung gemessen,
(iv) eine Härte von über 1,7 GPa wie durch Diamant-Nanoeinkerbung gemessen.

## Revendications

1. Stratifié de verre renforcé comprenant :
au moins une couche de verre renforcé présentant une première surface et une deuxième surface disposée à l'opposé de la première surface ; et
un ou plusieurs revêtements qui adhèrent à la première surface du verre renforcé,
**caractérisé en ce que** l'un ou les plusieurs revêtements donne/donnent une résistance asymétrique au choc, telle que déterminée selon le procédé dans la description, qui dépend de la surface du verre sur laquelle le choc est exercé sur l'au moins une couche de verre renforcé tel que démontré par une absence de délamination en cas d'inspection sous microscope optique après indentation avec un indenteur à diamant de Berkovich avec une charge de 4 grammes à 40 grammes, le revêtement présentant :
(i) un ou plusieurs oxydes sélectionnés dans le groupe constitué par SiO₂, Al₂O₃, TiO₂, Nb₂O₅, Ta₂O₅, ZrO₂, ou des combinaisons de ceux-ci,
(ii) une épaisseur de 0,01 à 10 µm,
(iii) un module d'élasticité supérieur à 16 GPa tel que mesuré par nano-indentation au diamant,
(iv) une dureté supérieure à 1,7 GPa telle que mesurée par nano-indentation au diamant.

2. Le stratifié de verre renforcé de la revendication 1, sachant que le verre renforcé comprend de l'aluminosilicate alcalin, de l'aluminoborosilicate alcalin, ou des combinaisons de ceux-ci, et sachant que la résistance asymétrique au choc comprend une résistance au choc pour des chocs dirigés vers la deuxième surface qui est inférieure à une résistance au choc pour des chocs dirigés vers la première surface.

3. Le stratifié de verre renforcé de l'une quelconque des revendications 1 et 2, sachant que le verre renforcé comprend plus de 2,0 % mol. d'oxydes sélectionnés dans le groupe constitué par Al₂O₃, ZrO₂, ou des mélanges de ceux-ci.

4. Le stratifié de verre renforcé de l'une quelconque des revendications 1 à 3, sachant que l'oxyde est SiO₂.

5. Le stratifié de verre renforcé de l'une quelconque des revendications 1 à 4, sachant que le verre a une épaisseur de 0,01 à 10 mm.

6. Le stratifié de verre renforcé de l'une quelconque des revendications 1 à 5, sachant que le verre renforcé n'est pas dépoli et est sensiblement exempt de défauts ou imperfections visibles.

7. Procédé de production d'un stratifié de verre renforcé comprenant :
la fourniture de verre sensiblement exempt d'imperfections visibles ; et
le renforcement du verre par trempage chimique, trempage thermique, ou les deux ;
**caractérisé en ce que** le procédé comprend en outre l'application d'un revêtement sur au moins une surface du verre renforcé pour produire un stratifié de verre renforcé présentant une résistance asymétrique au choc, telle que déterminée selon le procédé dans la description, qui dépend de la surface du verre sur laquelle le choc est exercé tel que démontré par une absence de délamination en cas d'inspection sous microscope optique après indentation avec un indenteur à diamant de Berkovich avec une charge de 4 grammes à 40 grammes, le revêtement présentant :
(i) un ou plusieurs oxydes sélectionnés dans le groupe constitué par SiO₂, Al₂O₃, TiO₂, Nb₂O₅, Ta₂O₅, ZrO₂, ou des combinaisons de ceux-ci,
(ii) une épaisseur de 0,01 à 10 µm,
(iii) un module d'élasticité supérieur à 16 GPa tel que mesuré par nano-indentation au diamant,
(iv) une dureté supérieure à 1,7 GPa telle que mesurée par nano-indentation au diamant.
